(19) Europäisches Patentamt / European Patent Office / Office européen des brevets

(11) **EP 4 645 407 A1**

(12) **EUROPEAN PATENT APPLICATION**
published in accordance with Art. 153(4) EPC

(43) Date of publication:
**05.11.2025 Bulletin 2025/45**

(21) Application number: **23911365.7**

(22) Date of filing: **30.10.2023**

(51) International Patent Classification (IPC):
**H01M 4/13** (2010.01)       **H01M 4/133** (2010.01)
**H01M 4/136** (2010.01)      **H01M 4/38** (2006.01)
**H01M 4/58** (2010.01)       **H01M 4/587** (2010.01)
**H01M 4/66** (2006.01)       **H01M 10/052** (2010.01)

(52) Cooperative Patent Classification (CPC):
**H01M 4/13; H01M 4/133; H01M 4/136; H01M 4/38;
H01M 4/58; H01M 4/587; H01M 4/66;
H01M 10/052;** Y02E 60/10

(86) International application number:
**PCT/JP2023/039091**

(87) International publication number:
**WO 2024/142581 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210436**

(71) Applicants:
• **SUMITOMO RUBBER INDUSTRIES, LTD.
  Kobe-shi, Hyogo 651-0072 (JP)**
• **Orlib Limited
  Tokyo 113-0033 (JP)**

(72) Inventors:
• **KUBO, Tatsuya
  Kobe-shi, Hyogo 651-0072 (JP)**
• **CHUJO, Fumiya
  Kobe-shi, Hyogo 651-0072 (JP)**
• **NAKAMURA, Hiroyuki
  Kobe-shi, Hyogo 651-0072 (JP)**
• **SAITO, Shunsuke
  Tokyo 113-0033 (JP)**

(74) Representative: **TBK
Bavariaring 4-6
80336 München (DE)**

(54) **ELECTRODE AND SECONDARY BATTERY**

(57) Provided is an electrode comprising a current collector, a conductive coating layer formed on the current collector, and a composite material layer formed on the conductive coating layer, wherein an average thickness of the conductive coating layer is 0.5 $\mu$m or more, wherein an interface tortuosity $\tau$ between the conductive coating layer and the composite material layer is 1.05 or more, wherein the composite material layer comprises an active material, and wherein the active material has an average particle size $d_{50}$ of 2 $\mu$m or more. It is an object of the present invention to improve the charge and discharge capacity even with a high basis weight.

FIG. 1

EP 4 645 407 A1

**Description**

TECHNICAL FIELD

The present invention relates to a novel electrode, and a secondary battery comprising the electrode, particularly a lithium-ion secondary battery.

BACKGROUND ART

The secondary battery, particularly the lithium-ion secondary battery has been mainly used as a battery for portable electronic device because of its large charge and discharge capacity. In addition, the lithium-ion secondary battery has been used more and more as a battery for electric vehicle as well, and expected to have improved performance.

Patent Document 1 describes that polyacrylonitrile modified with sulfur is used as a positive electrode active material for an electrode of a lithium-ion secondary battery.

Moreover, it has been proposed to use, as a negative electrode active material, a material that can absorb and release more lithium ions, such as silicon (Si), tin (Sn), and the like in order to increase capacity of a battery.

PRIOR ART DOCUMENT

Patent Document

Patent Document 1: WO 2010/044437

SUMMARY OF THE INVENTION

PROBLEM TO BE SOLVED BY THE INVENTION

However, although an organic active material comprising a sulfur-based active material as described in Patent Document 1 has attracted attention as an active material for next-generation battery, it is softer than a conventional transition metal oxide and therefore cannot bite into a current collector when pressed into the current collector. Therefore, a composite material layer comprising the active material and the current collector can only be in contact in the form like points. Therefore, resistance of an electrode is increased, which leads to a problem that charge and discharge capacity inherent to the active material cannot be obtained, and adhesion of the composite material layer is low, which therefore leads to a problem that the composite material layer easily peels off from the current collector during electrode production or charge/discharge. These problems become evident particularly when the electrode is made thicker for increasing the capacity of the battery, that is, when a so-called high basis weight electrode is produced.

It is an object of the present invention to provide an electrode, that is, a positive electrode or a negative electrode, which has a high charge and discharge capacity despite its high basis weight, and a secondary battery comprising the electrode, particularly a lithium-ion secondary battery.

MEANS TO SOLVE THE PROBLEM

That is, the present invention relates to the following electrode:

an electrode comprising a current collector, a conductive coating layer formed on the current collector, and a composite material layer formed on the conductive coating layer,
wherein an average thickness of the conductive coating layer is 0.5 $\mu$m or more,
wherein an interface tortuosity $\tau$ between the conductive coating layer and the composite material layer is 1.05 or more, and
wherein the composite material layer comprises an active material, the active material having an average particle size $d_{50}$ of 2 $\mu$m or more.

EFFECT OF THE INVENTION

According to the present invention, an electrode, that is, a positive electrode or a negative electrode, which has a high charge and discharge capacity despite its high basis weight, and a secondary battery comprising the electrode, particularly a lithium-ion secondary battery can be provided.

BRIEF DESCRIPTION OF THE DRAWINGS

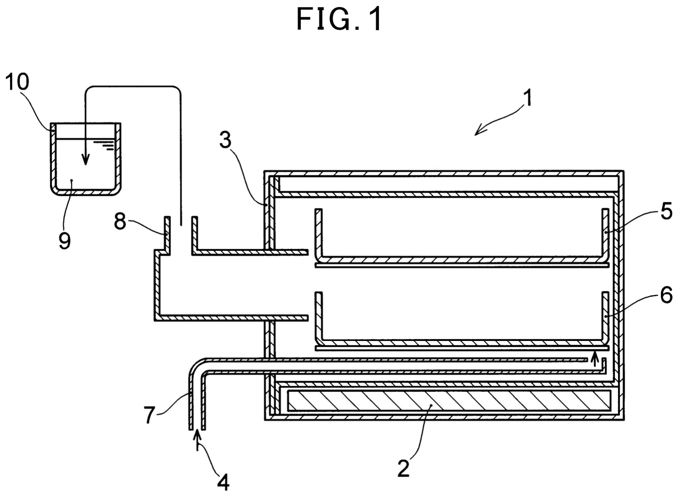

FIG. 1 is a cross-sectional view schematically showing a reaction device used for producing an active material in Examples of the present invention.

EMBODIMENT FOR CARRYING OUT THE INVENTION

The present invention will be described in detail as follows. Besides, numerical values of upper limits and lower limits relating to "or more" and "or less" for descriptions of numerical ranges are numerical values that can be arbitrarily combined, and numerical values in Examples can also be the upper limits and the lower limits. In addition, the numerical range shown to include the values of both ends is interpreted as disclosing a numerical range not including the value of one end among the values of both ends, and a numerical range not including any of the values of both ends, unless contrary to the purpose of the present invention.

One embodiment of the present invention is the following electrode:

an electrode comprising a current collector, a conductive coating layer formed on the current collector, and a composite material layer formed on the conductive coating layer,
wherein an average thickness of the conductive coating layer is 0.5 $\mu$m or more,
wherein an interface tortuosity $\tau$ between the conductive coating layer and the composite material layer is 1.05 or more, and
wherein the composite material layer comprises an active material, the active material having an average particle size $d_{50}$ of 2 $\mu$m or more.

Although it is not intended to be bound by a theory, the following can be considered as a reason why the electrode of the present invention can improve the charge and discharge capacity despite its high basis weight.

That is, in the electrode of the present invention, a highly flexible conductive coating layer is provided in advance on a current collector, and a composite material layer is applied thereon and pressed. As a result, the composite material layer bites into the conductive coating layer, and the conductive coating layer and the composite material layer come into contact with each other on surface rather than points. Therefore, resistance of the electrode is decreased and adhesion of the composite material layer is increased, so that the charge and discharge capacity can be improved even with a high basis weight.

For each of any five particles of the active material, when a particle size is referred to as d, in $\mu$m, and a test force at the moment when the particle breaks in a micro-compression test is referred to as P, in mN, an average value of breaking strength Cs, in MPa, calculated by the following equation is preferably less than 70.0:

$$Cs = 2.48 \times P/\pi d^2$$

(provided that d is an average value of diameters measured in two perpendicular directions for the particles, and $\pi$ is a circular constant (3.14).)

This is because such a configuration comprises a typical feature of the present invention, that is, a low breaking strength.

The average value of the breaking strength Cs, in MPa, is preferably less than 10.0.

This is because such a configuration comprises a typical feature of the present invention, that is, a low breaking strength.

It is preferable that the active material comprises at least two or more elements selected from the group consisting of carbon, sulfur, nitrogen, and oxygen, and that a content of the elements in the active material is greater than 50.0% by mass.

This is because such a configuration is a typical example of an active material that comprises the feature of the present invention.

It is preferable that the active material comprises sulfur, and that a content of the sulfur in the active material is 45.0% by mass or more.

This is because such a configuration is a typical example of an active material that comprises the feature of the present invention.

A carbon content based on a total mass of the composite material layer is preferably 95% by mass or less.

A sulfur content based on the total mass of the composite material layer is preferably 5% by mass or more.

A volume resistivity of the conductive coating layer when coated on the surface of the current collector is preferably $1.0 \times 10^6 \Omega$ cm or less.

An initial discharge capacity of the electrode when used as a positive electrode is preferably greater than 650 mAh/g.

Another aspect of the present invention is a secondary battery comprising said electrode.

The secondary battery is preferably a lithium-ion secondary battery.

<Definitions>

The term "conductive coating layer" refers to a layer that contributes to a reduction in resistance of an electrode by a composite material layer formed on the conductive coating layer biting well into the conductive coating layer when pressed during electrode production. The volume resistivity of the conductive coating layer is preferably $1.0 \times 10^6 \Omega$cm or less. The "volume resistivity of the conductive coating layer" is a value measured in accordance with JIS K 7194-1994.

The term "composite material layer" refers to a layer, which is a member that constitutes an electrode together with a current collector, composed of an electrode material (composite material) that comprises an active material.

The term "initial discharge capacity" refers to the third discharge capacity in the present specification, unless otherwise specified.

<Measuring method>

An "average thickness of a conductive coating layer" is measured by measuring a total thickness including a current collector after film production of the conductive coating layer at any five points using Digimatic Indicator manufactured by Mitutoyo Corporation, and calculating an arithmetic mean of values obtained by subtracting a thickness of the current collector from the measured value.

In the present invention, an "interface tortuosity $\tau$" means an interface tortuosity between a conductive coating layer and a composite material layer that constitute an electrode. The interface tortuosity is expressed as b/a with a length of an interface on the composite material layer side (b $\mu$m) at a distance (a $\mu$m) between two given points on a cross section of an electrode taken along a plane perpendicular to a flat surface on which the conductive coating layer and the composite material layer are layered (here, a<b). In the present invention, the interface tortuosity $\tau$ is defined as an average value of measurement results taken once for each of any five cross sections of the electrode, five times in total. Moreover, in a case where the electrode has a front surface and a back surface, an average value is calculated five times for each surface, and an average value of both shall be further calculated. Furthermore, values of a and b can also be obtained from a microscope image. An image analysis software can be used to obtain the values of a and b from the microscope image. As the image analysis software, for example, Image-Pro (image analysis software manufactured by Media Cybernetics), ImageJ (https://imagej.nih.gov/ij/index.html), and the like can be used.

An "amount of a carbon element in an active material" is measured by an elemental analysis method described below.

An "amount of a sulfur element in an active material" is measured by an elemental analysis method described below.

An "amount of a nitrogen element in an active material" is measured by an elemental analysis method described below.

An "amount of an oxygen element in an active material" is measured by an elemental analysis method described below.

An "average particle size $d_{50}$" is a volume basis cumulative 50% size (median diameter) measured with a laser diffraction/scattering type particle size distribution analyzer (particle size distribution analyzer PSA1090L manufactured by Anton Paar GmbH) using water as a dispersion medium.

(Breaking strength Cs)

A breaking strength Cs, in MPa, is a value that can be determined by the micro-compression test described in Examples section below. However, the breaking strength Cs, in MPa, can be measured from five active material particles before they are applied to the electrode, or can also be measured by extracting, from the electrode, five active material particles that retain their particle shapes, i.e., are not broken, even after they are applied to the electrode.

The electrode and the secondary battery of the present invention will be described below.

<Electrode>

The electrode of the present invention is an electrode comprising a current collector, a conductive coating layer formed on the current collector, and a composite material layer formed on the conductive coating layer, wherein an average thickness of the conductive coating layer is 0.5 $\mu$m or more, wherein an interface tortuosity $\tau$ between the conductive coating layer and the composite material layer is 1.05 or more, wherein the composite material layer comprises an active material, and wherein the active material has an average particle size $d_{50}$ of 2 $\mu$m or more.

[Current collector]

The current collector is a chemically inert electronic conductor for keeping on applying an electrical current to an electrode during discharging or charging of a battery. Examples of a material of the current collector can include at least one selected from silver, copper, gold, aluminum, magnesium, tungsten, cobalt, zinc, nickel, iron, platinum, tin, indium, titanium, ruthenium, tantalum, chromium, and molybdenum, as well as a metal material such as stainless steel and the like. Among them, aluminum is preferable.

The surface of the current collector may have a known protective layer or may be treated by a known method.

The current collector can take a form of a foil, a sheet, a film, a linear shape, a bar shape, a mesh, or the like. As the current collector, for example, a metal foil such as a copper foil, a nickel foil, an aluminum foil, a stainless steel foil, and the like can be appropriately used. A foil-shaped current collector preferably has a thickness within a range of 1 $\mu$m to 100 $\mu$m.

[Conductive coating layer]

The conductive coating layer when coated on the surface of the current collector is preferably a coating layer having a volume resistivity of $1.0 \times 10^6 \Omega$ cm or less. The conductive coating layer contributes to a reduction in resistance of an electrode by a composite material layer formed on the conductive coating layer biting well into the conductive coating layer when pressed during electrode production. The volume resistivity is preferably $1.0 \times 10^5 \Omega$cm or less, more preferably $1.0 \times 10^4 \Omega$cm or less, further preferably $1.0 \times 10^3 \Omega$cm or less.

A material constituting the conductive coating layer is not particularly limited as long as it can achieve an interface tortuosity $\tau$ of 1.05 or more with the composite material layer. Thus, among materials usually used to coat the surface of the current collector, any material that can achieve the interface tortuosity $\tau$ of 1.05 or more can be used. Examples of such a material that can be used for the coating layer include, for example: a carbon material such as graphite, acetylene black, ketjen black, a carbon nanotube, graphene, and the like; a metal material such as silver, copper, gold, aluminum, magnesium, tungsten, cobalt, zinc, nickel, iron, platinum, tin, indium, titanium, ruthenium, tantalum, chromium, molybdenum, stainless steel, and the like; and a conductive polymer material such as polyvinylidene fluoride, poly(3,4-ethylenedioxythiophene) (PEDOT), polythiophene, polyaniline, polypyrrole, polyacetylene, and the like. These materials can be used alone, or two or more thereof can be used in combination. These materials may be in a form of a fiber or a bead. For example, a fibrous metal material or a bead-shaped metal material can be used.

The average thickness of the conductive coating layer is 0.5 $\mu$m or more. When the average thickness of the conductive coating layer is less than 0.5 $\mu$m, it is considered that it may be difficult to achieve the above-described interface tortuosity $\tau$, which is unfavorable. The average thickness of the conductive coating layer is preferably 1 $\mu$m or more, more preferably 2 $\mu$m or more, further preferably 4 $\mu$m or more, further preferably greater than 5 $\mu$m. There is no particular limit to an upper limit of the average thickness of the conductive coating layer, but it may be, for example, about 30 $\mu$m. Besides, the average thickness of the conductive coating layer can be measured by the above-described method.

[Composite material layer]

The composite material layer relating to the present invention comprises an active material mentioned below. As mentioned below, the composite material layer is formed using an electrode material (that is, a positive electrode material or a negative electrode material) comprising an active material.

(Carbon content)

The carbon content based on the total mass of the composite material layer is preferably 95% by mass or less.

A mass ratio of the carbon is preferably less than 90% by mass, more preferably less than 80% by mass, further preferably less than 70% by mass. On the other hand, the mass ratio is preferably greater than 5% by mass, more preferably greater than 10% by mass, further preferably greater than 15% by mass. The carbon content is measured, for example, by energy dispersion type X-ray spectroscopy with a scanning or transmission electron microscope (SEM-EDX or TEM-EDX).

(Sulfur content)

The sulfur content based on the total mass of the composite material layer is preferably 5% by mass or more.

A mass ratio of the sulfur is preferably greater than 10% by mass, more preferably greater than 20% by mass, further preferably greater than 30% by mass. The sulfur content is measured, for example, by energy dispersion type X-ray spectroscopy with a scanning or transmission electron microscope (SEM-EDX or TEM-EDX).

[Active material]

The active material relating to the present invention is not particularly limited as long as it has an average particle size $d_{50}$ of 2 $\mu$m or more and can achieve an interface tortuosity $\tau$ of 1.05 or more between the conductive coating layer and the composite material layer, and various kinds of active materials can be used. Among them, a relatively soft active material can be used as a typical example.

It is preferable that the active material comprises at least two or more elements selected from the group consisting of carbon, sulfur, nitrogen, and oxygen, and that a content of the elements in the active material is greater than 50.0% by mass. This is because such a compound is relatively soft and can take advantage of the feature of the present invention, that is, use of the conductive coating layer. The active material preferably comprises carbon and sulfur, and further preferably comprises carbon, sulfur, and oxygen.

The content of the elements in the active material is preferably greater than 60.0% by mass, more preferably greater than 70.0% by mass, further preferably greater than 75.0% by mass, further preferably greater than 80.0% by mass. On the other hand, the content is preferably less than 95.0% by mass, more preferably less than 90.0% by mass, further preferably less than 85.0% by mass.

(Amount of sulfur element)

An amount of a sulfur element in the active material is preferably 45.0% by mass or more. This is because such a compound is relatively soft and can take advantage of the feature of the present invention, that is, use of the conductive coating layer.

The amount of the sulfur element in the active material is preferably greater than 50.0% by mass, more preferably greater than 55.0% by mass, further preferably greater than 60.0% by mass. On the other hand, the amount of the sulfur element is preferably less than 75.0% by mass, more preferably less than 70.0% by mass, further preferably less than 65.0% by mass.

(Amount of carbon element)

An amount of a carbon element in the active material is preferably greater than 10.0% by mass, more preferably greater than 13.0% by mass, further preferably greater than 15.0% by mass. On the other hand, the amount is preferably less than 23.0% by mass, more preferably less than 21.0% by mass, further preferably less than 19.0% by mass.

(Amount of hydrogen element)

An amount of a hydrogen element in the active material is relatively small, because hydrogen atoms in a raw material are combined with other elements by baking to become gases, which are released outside the system to decrease. The amount of the hydrogen element in the active material is preferably less than 1.0% by mass. The amount of the hydrogen element is more preferably less than 0.5% by mass, further preferably less than 0.3% by mass, further preferably less than 0.2% by mass. On the other hand, a lower limit of the amount of the hydrogen element may be 0.1% by mass, may be less than 0.1% by mass, or may be a detection limit or less.

(Amount of nitrogen element)

An amount of a nitrogen element in the active material may be a detection limit or less, but may be compounded, and an amount of the nitrogen element when compounded in the active material is preferably greater than 5.0% by mass, more preferably greater than 8.0% by mass, further preferably greater than 10.0% by mass. On the other hand, the amount of the nitrogen element is preferably less than 30.0% by mass, more preferably less than 25.0% by mass, further preferably less than 20.0% by mass.

(Amount of oxygen element)

An amount of an oxygen element in the active material is preferably greater than 0.5% by mass, more preferably greater than 1.0% by mass, further preferably greater than 1.5% by mass, further preferably greater than 2.0% by mass, further preferably greater than 2.5% by mass. On the other hand, the amount of the oxygen element is preferably less than 5.0% by mass, more preferably less than 4.5% by mass, further preferably less than 4.0% by mass, further preferably less than 3.5% by mass.

(Average particle size $d_{50}$)

An average particle size $d_{50}$ of the active material is 2 μm or more. When the average particle size $d_{50}$ is less than 2 μm, a specific surface area of the active material increases, and required amounts of a binder and a conductive aid that constitute an electrode increase, which unfavorably leads to a relative reduction in the amount of the active material in the electrode.

The average particle size $d_{50}$ is preferably greater than 3 μm, more preferably greater than 4 μm, further preferably 5 μm or more, further preferably greater than 6 μm, further preferably greater than 7 μm, further preferably greater than 8 μm. Moreover, the average particle size $d_{50}$ is preferably 50 μm or less, more preferably 40 μm or less, further preferably 30 μm or less.

(Breaking strength Cs (MPa))

An average value of breaking strength Cs, in MPa, measured for each of any five particles of the active material is preferably less than 70.0. The breaking strength Cs, in MPa, is a value that can be determined by the micro-compression test described in Examples section below. Besides, the breaking strength Cs of $LiCoO_2$ measured by this method is 72.25 MPa.

The average value of breaking strength Cs, in MPa, is preferably less than 60.0 MPa, more preferably less than 30.0 MPa, further preferably less than 15.0 MPa, further preferably 10.0 MPa or less, further preferably less than 10.0 MPa, further preferably less than 5.0 MPa, from the viewpoint of the effects of the present invention. Besides, "less than 5.0 MPa" also includes a case where Cs is not measurable. Cs is an index of hardness, with a larger value indicating a higher hardness. However, with a very soft hardness, Cs becomes impossible to be measured. In the present invention, it is preferable that an active material particle is soft, and therefore, as mentioned above, a preferred range is described. However, an active material particle is also preferable even when it is very soft and Cs is not measurable. Thus, "less than 10.0 MPa" also includes the case where Cs is not measurable.

The average value of breaking strength Cs, in MPa, can be adjusted, for example, in a case where a polymer is used as a raw material of the active material, so that it can be decreased by using a polymer with a lower degree of cross-linkage or a more porous polymer, and conversely, it can be increased by using a polymer with a higher degree of cross-linkage or a less porous polymer. In this way, the breaking strength Cs (MPa) can be adjusted.

[Interface tortuosity τ]

An interface tortuosity τ between a conductive coating layer and a composite material layer is 1.05 or more. When the interface tortuosity τ is less than 1.05, the composite material layer does not sufficiently bite into the conductive coating layer, and the conductive coating layer and the composite material layer cannot come in sufficient contact with each other, which is not preferable.

The interface tortuosity τ can be adjusted by adjusting softness (or hardness) of the conductive coating layer and the composite material layer. That is, it can be increased or decreased by adjusting the relationship in softness (or hardness) between the composite material layer and the conductive coating layer so that the composite material layer bites into the conductive coating layer.

The interface tortuosity τ is preferably 1.10 or more, more preferably 1.15 or more, further preferably 1.20 or more, further preferably 1.25 or more, further preferably 1.30 or more, further preferably 1.35 or more, further preferably 1.40 or more, further preferably 1.45 or more, further preferably 1.50 or more. There is no particular limit to an upper limit of the interface tortuosity τ, but when merely indicated as the reference value, it is, for example, about 1.70.

[Electrode coating weight]

An electrode coating weight, in $mg/cm^2$, is a value defined in the Examples section below. The electrode coating weight is preferably greater than 1 $mg/cm^2$, more preferably 3 $mg/cm^2$ or more, further preferably greater than 5 $mg/cm^2$. On the other hand, the electrode coating weight is preferably less than 20 $mg/cm^2$, more preferably 15 $mg/cm^2$ or less, further preferably less than 13 $mg/cm^2$.

[Electrode porosity]

An electrode porosity, in %, is a value defined in the Examples section described below. The electrode porosity is preferably greater than 15%, more preferably 22% or more, further preferably greater than 25%. On the other hand, the electrode porosity is preferably less than 60%, more preferably 52% or less, further preferably less than 50%.

[Electrode adhesion]

An electrode adhesion, in mN/mm, is a value defined in the Examples section below. The electrode adhesion is preferably greater than 10 mN/mm, more preferably greater than 25 mN/mm, further preferably 31 mN/mm or more. On the other hand, the electrode porosity is preferably less than 50 mN/mm, more preferably less than 40 mN/mm, further preferably 35 mN/mm or less.

[Charge and discharge capacity]

The electrode of the present invention exhibits excellent charge and discharge capacity. Besides, in the following description, an initial discharge capacity refers to the third discharge capacity ($DC_3$), unless otherwise specified. Here, the third discharge capacity is a discharge capacity when charging and discharging with a discharge termination voltage of 1.0 V and a charge termination voltage of 3.0 V are performed three times after production of an electrode and a battery (the third discharging when charging and discharging is repeated as the first discharging, the first charging, the second discharging, the second charging, the third discharging, and the third charging). In the case of discharging, when discharging is performed at a constant current (current value equivalent to 50 mA per 1 g of a positive electrode active material), a voltage of 3.0 V finally drops to 1.0V. A total time, in h, taken for the voltage to drop from 3.0 V to 1.0 V is measured, which is multiplied by an applied current, in mA, to obtain a capacity, in mAh, and then which is divided by a weight of the active material to obtain a specific capacity, in mAh/g. On the other hand, in the case of charging, a voltage conversely rises due to charging with a constant current, and when it finally reaches 3.0 V, charging is terminated.

(First discharge capacity ($DC_1$))

The first discharge capacity ($DC_1$), in mAh/g, of the electrode of the present invention is preferably 650 mAh/g or more. The first discharge capacity is preferably greater than 650 mAh/g, more preferably greater than 700 mAh/g, further preferably greater than 750 mAh/g, further preferably 800 mAh/g, further preferably greater than 850 mAh/g, further preferably greater than 875 mAh/g, further preferably 880 mAh/g or more, further preferably greater than 890 mAh/g, further preferably greater than 900 mAh/g. There is no particular limit to an upper limit of the first discharge capacity, and the higher it is, the more preferable it is. Thus, there is little significance in mentioning the upper limit of the first discharge capacity, but usually, it can also be assumed to be, for example, about 950 mAh/g, merely as the reference value.

(Initial discharge capacity ($DC_3$))

An initial discharge capacity ($DC_3$), in mAh/g, of the electrode of the present invention is preferably 650 mAh/g or more. The initial discharge capacity is preferably greater than 650 mAh/g, more preferably greater than 700 mAh/g, further preferably greater than 710 mAh/g, further preferably greater than 720 mAh/g, further preferably greater than 730 mAh/g, further preferably greater than 740 mAh/g, further preferably 750 mAh/g or more, further preferably greater than 750 mAh/g. There is no particular limit to an upper limit of the initial discharge capacity, and the higher it is, the more preferable it is. Thus, there is little significance in mentioning the upper limit of the initial discharge capacity, but usually, it can also be assumed to be, for example, about 800 mAh/g, merely as the reference value.

In addition, a discharge capacity when the electrode of the present invention is used as a positive electrode is determined by a configuration of the positive electrode if it is measured so that a performance relating to the discharge capacity of the positive electrode can be fully exhibited using a negative electrode and an electrolyte within common technical knowledge that can be durably used as a lithium-ion secondary battery (i.e., such that Li is not depleted). For example, for the negative electrode, an amount of lithium used may be preferably two times or more, more preferably five times or more, further preferably ten times or more, further preferably 50 times or more (mol amount) an amount of sulfur (mol amount) in the positive electrode. Moreover, for example, for the electrolyte, when an amount of an electrolytic solution (microliter) is preferably 10 times or more, more preferably 20 times or more, further preferably 50 times or more an amount of sulfur, in mg, in the positive electrode, the discharge capacity of the positive electrode can be fully exhibited, leading to a longer battery life. On the other hand, in consideration of an energy density of the battery, it is preferable that the amount of the electrolytic solution is small. For example, the amount of the electrolytic solution (microliter) is preferably 5 times or less, more preferably 3 times or less, further preferably 1 time or less the amount of sulfur, in mg, in the positive electrode. Here, a volume V, in mL, of the electrolyte means a total volume of electrolyte solutions including a solute. Besides, the electrolyte may be in a form of an electrolytic solution or in a form of a solid (solid electrolyte), or a combination of them can be used.

[Applications]

The electrode of the present invention can be used as a positive or negative electrode of a secondary battery, particularly a lithium-ion secondary battery. Moreover, the electrode of the present invention is preferably used as a positive electrode.

The electrode can be configured by using materials described in the Producing method section below in the same manner as described in the same section. That is, when the above-described electrode is used as a positive electrode, a conductive aid, a binder, a current collector, etc. described in the Producing method section below can be used in the same manner as described in the same section to form a positive electrode, and when the above-described electrode is used as a negative electrode, a conductive aid, a binder, a current collector, etc. described in the Producing method section below can be used in the same manner as described in the same section to form a negative electrode. As such, the descriptions in the Producing method section below can be taken into consideration as descriptions of the present electrode.

<Secondary battery>

The secondary battery of the present invention is a secondary battery comprising the above-described electrode, particularly a lithium-ion secondary battery comprising the above-described electrode.

The secondary battery can be produced by a conventional method. That is, when the above-described electrode is used as a positive electrode, a secondary battery can be configured by additionally using a negative electrode, an electrolyte, a separator, etc. On the other hand, when the above-described electrode is used as a negative electrode, a secondary battery can be configured by additionally using a positive electrode, an electrolyte, a separator, etc. In particular, when the above-described electrode is used as a positive electrode of a lithium-ion secondary battery, the lithium-ion secondary battery can be configured by using a negative electrode, an electrolyte, a separator, etc. described in the Producing method section below in the same manner as described in the same section. On the other hand, when the above-described electrode is used as a negative electrode of a lithium-ion secondary battery, the lithium-ion secondary battery can be configured by using a positive electrode, an electrolyte, a separator, etc. described in the Producing method section below in the same manner as described in the same section.

[Applications]

The secondary battery of the present invention is useful as a secondary battery having improved charge and discharge capacity despite its high basis weight.

<Producing method>

A method of producing the electrode and the secondary battery of the present invention will be described below in order, starting with a method of producing an active material that constitutes the electrode.

[Production of active material]

The active material of the present invention can be produced by a producing method including the steps of:

(1) mixing an acrylic resin, sulfur, and an iron compound comprising a divalent or trivalent iron ion to obtain a baking raw material; and
(2) baking the baking raw material.

(Acrylic resin)

In the present invention, the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2).

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO-Y-OCO(R^{22})C=CH_2 \quad\quad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom, provided that when there are two or more of the ether bonds, any adjacent oxygen atoms always have two or more intervening carbon atoms between them.)

In the formula (1), $R^{11}$ is preferably a methyl group, and $R^{12}$ is preferably an alkyl group having 1 or more and 6 or less carbon atoms, more preferably an alkyl group having 1 or more and 4 or less carbon atoms, and among them, more preferably a methyl group, n-butyl, i-butyl, or t-butyl group. Examples of the compound represented by the formula (1) include, for example, methyl (meth)acrylate, butyl (meth)acrylate, and the like, more preferably methyl methacrylate and butyl methacrylate. Here, "(meth)acrylate" of methyl (meth)acrylate and butyl (meth)acrylate represents either "acrylate" or "methacrylate" (the same shall apply hereinafter). A further preferred example of the compound represented by the formula (1) is butyl methacrylate.

In the formula (2), both $R^{21}$ and $R^{22}$ are preferably methyl groups. The number of carbon atoms in the hydrocarbylene group (straight chain) of Y is preferably 2 or more and 6 or less, more preferably 2 or 3. The number of substituents in Y is preferably 1 or more and 4 or less, more preferably 1 or 2. As the substituents in Y, one or more substituents selected from the group consisting of a hydroxyl group and an alkyl group having 1 or more and 4 or less carbon atoms are preferable, and as the alkyl group having 1 or more and 4 or less carbon atoms, a methyl group is preferable. When the carbon skeleton of Y has an ether bond formed by an oxygen atom, for example, a moiety corresponding to -Y-O- is preferably represented by the following formula (3) (provided that no substituent in Y is considered in the formula (3)):

$$-(CH_2)_l-(CH_2CH_2O)_m-(CH_2CH_2CH_2O)_n- \quad\quad (3)$$

(wherein l is 0 or more and 6 or less, m is 0 or more and 3 or less, and n is 0 or more and 2 or less. However, l, m, and n cannot be 0 at the same time.)

In the formula (3), it is preferable that l is 1, 2, 3, 4, 5, or 6, and m and n are 0; m is 1, 2, or 3, and l and n are 0; or n is 1 or 2, and l and m are 0.

Examples of the compound represented by the formula (2) include, for example, ethylene glycol di(meth)acrylate, diethylene glycol di(meth)acrylate, triethylene glycol di(meth)acrylate, 1,6-hexanediol di(meth)acrylate, neopentine glycol di(meth)acrylate, glycerin di(meth)acrylate, and the like. Among them, ethylene glycol dimethacrylate is preferable.

Preferred examples of the acrylic resin include a homopolymer of methyl (meth)acrylate, a homopolymer of butyl (meth)acrylate, a copolymer of methyl (meth)acrylate and ethylene glycol di(meth)acrylate, a copolymer of butyl (meth)acrylate and ethylene glycol di(meth)acrylate, and the like. Among them, as the acrylic resin, an acrylic resin of methacrylate type is preferable. More preferred examples of the acrylic resin include a copolymer of butyl methacrylate and ethylene glycol dimethacrylate.

One or more kinds of acrylic resins can be used.

<<Availability or production of acrylic resin>>

The acrylic resin is commercially available or can be produced by a conventional method within the purview of knowledge of those skilled in the art. Examples of the commercially available acrylic resin include, for example, those manufactured by Sekisui Kasei Co., Ltd.

(Sulfur)

As sulfur, any of those in various forms such as a powdered sulfur, an insoluble sulfur, a precipitated sulfur, a colloidal sulfur, and the like can be used. Among them, a precipitated sulfur and a colloidal sulfur are preferable.

A content of sulfur is preferably greater than 50 parts by mass, more preferably greater than 70 parts by mass, further preferably greater than 90 parts by mass, based on 100 parts by mass of the acrylic resin. When the content is greater than 50 parts by mass, there is a tendency that charge and discharge capacity and cycle characteristics can be improved. On the other hand, there is no upper limit to the content of sulfur, but it is usually preferably less than 1000 parts by mass, more preferably less than 500 parts by mass, further preferably less than 300 parts by mass. When it is 1000 parts by mass or less, there is a tendency to be advantageous in terms of cost.

As sulfur, any of various allotropes can be used, but those comprising $S_8$ sulfur which is solid at normal temperature and pressure are preferable, and $S_8$ sulfur alone is more preferable.

(Iron compound comprising a divalent or trivalent iron ion)

The iron compound comprising a divalent or trivalent iron ion is not particularly limited as long as it decomposes during baking and reacts with sulfur to generate iron disulfide, and a variety of such iron compounds can be used. Examples of such iron compounds include an iron acid salt, an iron complex, and the like. Examples of the iron acid salt include both an organic acid salt of iron and an inorganic acid salt of iron. On the other hand, examples of the iron complex include a neutral iron complex and an iron complex ion salt (iron complex salt).

Examples of the organic acid salt of iron include, for example, a salt of divalent iron ($Fe^{2+}$) and organic acid, a salt of trivalent iron ($Fe^{3+}$) and organic acid, and the like. Among them, a salt of divalent iron and organic acid is preferable. The organic acid is, but not particularly limited to, one having a carboxyl group (-COOH), one having a sulfo group (-$SO_3H$), or the like. Among them, one having a carboxyl group is preferable. Specific examples of the organic acid include fatty acid, oxalic acid, tartaric acid, citric acid, malic acid, succinic acid, and the like. Specific examples of fatty acid include, for example, those having 1 or more and 6 or less carbon atoms such as acetic acid, propionic acid, butyric acid, and the like. Among them, acetic acid, oxalic acid, and the like are preferable. Preferred examples of the organic acid salt of iron include iron (II) acetate, iron (II) oxalate, and the like. They may be hydrates. One or more kinds of organic acid salts of iron can be used.

Examples of the inorganic acid salt of iron include, for example, a salt of divalent iron ($Fe^{2+}$) and inorganic acid, a salt of trivalent iron ($Fe^{3+}$) and inorganic acid, and the like. Specific examples of the inorganic acid include hydrochloric acid, sulfuric acid, nitric acid, and the like. Among them, nitric acid and the like are preferable. Preferred examples of the inorganic acid salt of iron include iron (II) chloride, iron (III) chloride, iron (II) sulfate, iron (III) sulfate, iron (II) nitrate, iron (III) nitrate, and the like. They may be hydrates. One or more kinds of inorganic acid salts of iron can be used.

Examples of the iron complex include, for example, a divalent iron ($Fe^{2+}$) complex, a trivalent iron ($Fe^{3+}$) complex, and the like. The iron complex may be in a form of a neutral complex or in a form of a complex salt. A ligand that coordinates to the iron ion is not particularly limited, examples of which include, for example, halogen atoms such as a chlorine atom, a bromine atom, and the like, a cyano group, a dicyclopentadienyl group, N,N'-bis(salicylidene)ethylenediamine, and the like. Examples of the iron complex include, for example, potassium hexacyanidoferrate(II) ($[Fe(CN)_6]K_4$), potassium hexacyanidoferrate(III) ($[Fe(CN)_6]K_3$), sodium iron(III) chloride ($[FeCl_4]Na$), dicyclopentadienyl iron(II) (ferrocene), N,N'-bis(salicylidene)ethylene diaminato iron(III) chloride, and the like. One or more kinds of iron complexes can be used.

As the iron compound comprising a divalent or trivalent iron ion, at least one selected from the group consisting of the above-described organic acid salt of iron, inorganic acid salt of iron, neutral iron complex, and iron complex salt can be used. Among them, the organic acid salt of iron, the inorganic acid salt of iron, or the neutral iron complex is preferable.

A content of the iron compound comprising a divalent or trivalent iron ion is preferably 50 parts by mass or more and 300 parts by mass or less based on 100 parts by mass of the acrylic resin, from the viewpoint of effects of the present invention. The content is more preferably greater than 50 parts by mass, further preferably greater than 60 parts by mass, further preferably greater than 70 parts by mass, further preferably greater than 75 parts by mass. On the other hand, the content is more preferably less than 250 parts by mass, further preferably less than 200 parts by mass, further preferably less than 150 parts by mass, further preferably 100 parts by mass or less.

(Other materials)

The raw material may appropriately comprise other materials commonly used in this field, as desired. Examples of such materials include, for example, a conductive carbon material. The conductive carbon material can improve conductivity of the active material.

(Conductive carbon material)

As the conductive carbon material, a carbon material having a graphite structure is preferable. As the carbon material, those having a condensed aromatic ring structure such as, for example, carbon black, acetylene black, ketjen black, graphite, a carbon nanotube (CNT), a carbon fiber (CF), graphene, fullerene, and the like can be used. One or more kinds of conductive carbon materials can be used.

Among them, acetylene black, carbon black, and ketjen black are preferable because they are inexpensive and excellent in dispersibility. Moreover, a small amount of CNT, graphene, or the like may be used in combination with acetylene black, carbon black, or ketjen black. Such a combined system makes it possible to further improve cycle characteristics of the lithium-ion secondary battery without significantly increasing the cost. Besides, the combined amount of the CNT or graphene is preferably 8% by mass or more and 12% by mass or less of a total amount of the conductive carbon material.

A content of the conductive carbon material is preferably 5 parts by mass or more, more preferably 10 parts by mass or more, based on 100 parts by mass of the acrylic resin. When the content is 5 parts by mass or more, there is a tendency to easily achieve the purpose of further improving charge and discharge capacity and cycle characteristics. On the other hand, the content is preferably 50 parts by mass or less, more preferably 40 parts by mass or less. When the content is 50 parts by mass or less, a proportion of a sulfur-containing structure in the sulfur-based active material does not relatively decrease, and there is a tendency to easily achieve the purpose of further improving charge and discharge capacity and cycle characteristics.

(Step (1))

The step (1) is a step of mixing an acrylic resin, sulfur, and an iron compound comprising a divalent or trivalent iron ion to obtain a raw material for baking. The mixing is not particularly limited as long as these components are sufficiently mixed, but in the present invention, examples of a preferred mixing method can at least include mixing by a WET method with a solvent or mixing by a DRY method without a solvent, which will be mentioned below.

<<WET method>>

In the present invention, the WET method comprises, for preparation of a raw material,

(1-a-1) adding the acrylic resin and the iron compound comprising a divalent or trivalent iron ion to an organic solvent and mixing them to obtain a liquid mixture;
(1-a-2) removing the organic solvent from the liquid mixture to obtain a dry mixture; and
(1-a-3) mixing the dry mixture and sulfur.

In the substep (1-a-1), the method of adding the acrylic resin and the iron compound comprising a divalent or trivalent iron ion to the organic solvent is not particularly limited as long as the liquid mixture can be obtained by mixing them. For example, (1) the acrylic resin and the iron compound comprising a divalent or trivalent iron ion may be simultaneously added to the organic solvent and mixed, (2) the acrylic resin may be added to the organic solvent and mixed, and then the iron compound comprising a divalent or trivalent iron ion may be further added and mixed, or (3) the iron compound comprising a divalent or trivalent iron ion may be added to the organic solvent and mixed, and then the acrylic resin may be further added and mixed.
In the substep (1-a-1), as the organic solvent, an organic solvent commonly used in this field can be used, examples of which include, for example, N-methyl-2-pyrrolidone, N,N-dimethylformaldehyde, alcohol, hexane, water, acetone, ethers such as tetrahydrofuran, etc., and the like. Moreover, as the organic solvent, one that dissolves the acrylic resin is preferable. This is because it contributes to a good mixing. One or more kinds of these solvents can be used.
The mixing of the acrylic resin and/or the iron compound comprising a divalent or trivalent iron ion with the organic solvent can be performed by stirring them in a container such as, for example, a beaker and the like.
In the substep (1-a-2), the removal of the organic solvent can be performed by a conventional method. For example, the removal can be performed by subjecting the liquid mixture to a drying method such as drying by heating, drying under reduced pressure, drying by heating under reduced pressure, and the like.
The dry mixture thus obtained is preferably pulverized before being subjected to the next step. This is because, in this way, it can be expected that the mixing in the substep (1-a-3) will be performed more appropriately. The pulverization can be performed by a conventional method, for example, using a cutter mill or the like. In particular, fine pulverization is preferably performed using a freezing pulverizer after coarse pulverization with a cutter mill.
In the substep (1-a-3), the mixing of the dry mixture and sulfur can be performed by a conventional method, examples of which can include, for example, a method of mixing them using a blender, and the like.

<<DRY method>>

In the present invention, the DRY method comprises, for preparation of a raw material, (1-b) mixing the acrylic resin, the sulfur, and the iron compound comprising a divalent or trivalent iron ion in powder state.
Here, the powder refers to a state where each material that is solid has been made fine enough to be suitable for mixing for the purpose of the present invention. Regarding a particle that constitutes the powder, a size of such particle is not particularly limited as long as the mixing is appropriately performed, but it is, in median diameter, usually within a range of 1 $\mu$m or more and 40 $\mu$m or less, for example. The size of the particle is preferably greater than 1 $\mu$m, more preferably greater than 2 $\mu$m, further preferably greater than 3 $\mu$m, further preferably greater than 4 $\mu$m, while preferably 40 $\mu$m or less, more preferably less than 40 $\mu$m, more preferably less than 30 $\mu$m, further preferably less than 20 $\mu$m, further preferably less than 15 $\mu$m, further preferably less than 10 $\mu$m, from the viewpoint of the effects of the present invention. The median diameter can be measured by a method described in Examples section below.
The mixing can be performed by a conventional method, for example, in the same manner as the mixing in the above-described substep (1-a-3).

In both the WET method and the DRY method, it is desirable to sufficiently mix raw materials in advance. Moreover, when conductive carbon materials and the like are added to the raw materials, these additives may also be mixed in advance of baking so as to be included in the raw materials beforehand.

The raw materials thus obtained may be used as they are in the next step (2), or if desired, they can be formed into pellets and used in the step (2).

(Step (2))

The step (2) is a step of baking the raw materials as obtained above. The baking of the raw materials can be performed by a conventional method, for example, by heating the raw materials at a predetermined temperature rising rate until reaching a predetermined temperature, maintaining them at the predetermined temperature for a predetermined time, and then cooling them naturally.

<<Non-oxidizing atmosphere>>

The baking is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, or the like. Thus, modification is performed, for example, in a quartz tube under an inert gas atmosphere.

<<Temperature rising rate>>

The temperature rising rate is preferably within a range of, for example, 50°C/h or higher and 500°C/h or lower. The temperature rising rate is preferably higher than 50°C/h, more preferably higher than 100°C/h. On the other hand, the temperature rising rate is preferably lower than 500°C/h, more preferably lower than 400°C/h, further preferably lower than 300°C/h, further preferably lower than 200°C/h. When the temperature rising rate is within such ranges, there is a tendency to easily achieve the purpose of improving charge and discharge capacity and cycle characteristics.

<<Baking temperature/time>>

A baking temperature refers to a temperature after completion of the temperature rising of the raw materials, the temperature being maintained for a certain period of time for baking the raw materials. The temperature is preferably in a range of higher than 250°C and lower than 550°C. When it is higher than 250°C, there is a tendency to avoid insufficient sulfurization reaction and prevent a decrease in charge and discharge capacity of the object. On the other hand, when it is lower than 550°C, there is a tendency that decomposition of the raw materials can be prevented and a decrease in yield and a decrease in charge and discharge capacity can be prevented. The temperature is more preferably higher than 300°C, further preferably higher than 350°C, further preferably higher than 380°C. On the other hand, the temperature is more preferably lower than 500°C, further preferably lower than 480°C, further preferably lower than 450°C.

The baking temperature in the step (2) is preferably higher than the temperature at which the iron compound comprising a divalent or trivalent iron ion thermally decomposes, from the viewpoint of the effects of the present invention.

A time for maintaining the baking temperature may be appropriately set according to types of raw materials, a baking temperature, etc., but is preferably 1 hour or more and 6 hours or less, for example. When it is 1 hour or more, there is a tendency that the baking can be sufficiently advanced, and when it is 6 hours or less, there is a tendency that excessive pyrolysis of the constituent components can be prevented. The time is preferably greater than 1 hour, more preferably greater than 1.5 hours. On the other hand, the time is preferably less than 6 hours, more preferably less than 4 hours.

<<Device>>

Baking can be performed by, for example, a muffle furnace (FIG. 1), or can be performed using a continuous device such as, for example, a twin-screw extruder and the like. When the continuous device is used, there is an advantage that the sulfur-based active material can be continuously produced through a series of operations such as also performing baking while kneading, pulverizing, and mixing the raw materials in the device, and the like.

The muffle furnace (FIG. 1) is a furnace partitioned by a hot plate or the like so that a heat source (heater) is not exposed inside the furnace in order to prevent contamination of a sample. In FIG. 1, the muffle furnace 1 has a heater 2 in the lower part of the furnace, the heater being partitioned by the hot plate. A lid 3 is installed on the front surface of the furnace (the left end side in the figure), which makes the furnace to have a structure in which the inside of the furnace can be held with an atmosphere of an inert gas 4. A thermocouple (not shown) is attached to the lid, so that a temperature inside the furnace during baking can be measured. Two tiers of stainless steel (SUS) rectangular parallelepiped trays 5 and 6 for baking raw materials are installed on the upper tier and the lower tier, inside the furnace.

The inside of the furnace is configured so that gas (for example, an inert gas such as an argon (Ar) gas and the like) can be continuously supplied in from and discharged out to the outside through a gas introduction tube 7 and a gas discharge tube 8. The gas discharge tube 8 is connected to a trap tank 10 accommodating a sodium hydroxide aqueous solution 9, and an exhaust gas to exit from the muffle furnace 1 through the gas discharge tube 8 to the outside once passes through the sodium hydroxide aqueous solution 9 in the trap tank 10 and then is released to the outside. Therefore, even if the exhaust gas contains a hydrogen sulfide gas generated by reaction, the hydrogen sulfide gas is neutralized with the sodium hydroxide aqueous solution and removed from the exhaust gas.

(Step of removing residue)

In a processed product obtained after baking, unreacted sulfur and the like which are precipitated from the sulfur sublimated during baking and then cooled remain behind. It is desirable to remove these residues as much as possible because they may cause deterioration of cycle characteristics. Removal of the residues can be performed according to a conventional method such as, for example, drying by heating under reduced pressure, drying with hot air, washing with a solvent, etc.

(Pulverization/classification)

The obtained sulfur-based active material is pulverized to have a predetermined particle size and classified, in order to obtain a particle having a size suitable for producing an electrode.

Besides, in the baking method using the twin-screw extruder as described above, pulverization of the produced active material can be performed, at the same time as production of the sulfur-based active material, by shearing during kneading.

[Production of electrode for secondary battery]

The electrode for secondary battery of the present invention can be produced using the active material obtained above. That is, the electrode can be obtained in the same manner as in a case of preparing a general electrode for secondary battery, except that a conductive coating layer is formed on a current collector, a composite material layer is formed on the conductive coating layer, and an interface tortuosity $\tau$ between the conductive coating layer and the composite material layer is set to a predetermined value.

(Using active material as positive electrode active material)

A positive electrode for secondary battery can be produced, for example, by mixing the above-described active material with a conductive aid, a binder, and a solvent to prepare a paste-like positive electrode material, applying the positive electrode material to a current collector previously coated with a conductive coating layer (a conductive coating layer-coated current collector), drying it, and then crimping it using a press machine or the like so as to achieve a predetermined interface tortuosity. The positive electrode thus obtained may be vacuum-dried, if necessary, to remove the solvent and the like before use.

<<Conductive aid>>

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. Moreover, as the conductive aid, the above-described conductive carbon material can also be used. One or two or more kinds of these conductive aids can be used.

<<Binder>>

Examples of the binder include polyvinylidene fluoride (PolyVinylidene DiFluoride: PVDF), polytetrafluoroethylene (PTFE), a styrenebutadiene rubber (SBR), polyimide (PI), polyamideimide (PAI), carboxymethylcellulose (CMC), polyvinyl chloride (PVC), an acrylic resin such as polyacrylic acid, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

<<Solvent>>

Examples of the solvent include N-methyl-2-pyrrolidone, N,N-dimethylformaldehyde, alcohol, hexane, water, and the like. One or more kinds of these solvents can be used.

<<Compounding amount>>

A compounding amount of these materials constituting the positive electrode is not particularly limited, but, for example, 2 to 100 parts by mass of a conductive aid, 2 to 50 parts by mass of a binder, and an appropriate amount of a solvent are preferably compounded based on 100 parts by mass of the active material.

<<Conductive coating layer-coated current collector>>

As a current collector used in producing the conductive coating layer-coated current collector, the above-described one can be used. The current collector may be used alone, or two or more thereof may be used in combination. In addition, the current collector may have its surface coated with carbon or the like. Specific examples of such a current collector having its surface coated with carbon or the like include, for example, a carbon-coated aluminum foil and the like. In this case, the current collector includes a carbon-coated portion.

The conductive coating layer-coated current collector can be produced as follows. For example, it can be produced, for example, by thoroughly mixing the material constituting the conductive coating layer with a solvent to prepare a paste-like conductive coating layer material, applying the conductive coating layer material to a surface of a current collector, and then drying it. As the solvent, any of solvents used in preparation of the positive electrode material can be used.

(Using active material as negative electrode active material)

A negative electrode for secondary battery can be produced, for example, by mixing the above-described active material with a conductive aid, a binder, and a solvent to prepare a paste-like negative electrode material, applying the negative electrode material to a current collector previously coated with a conductive coating layer (a conductive coating layer-coated current collector), drying it, and then crimping it using a press machine or the like so as to achieve a predetermined interface tortuosity. The negative electrode thus obtained may be vacuum-dried, if necessary, to remove the solvent and the like before use.

As the conductive aid, the binder, and the solvent, the same ones as in the case of using the active material as the positive electrode active material can be used, and the same can also be applied to the material constituting the conductive coating layer-coated current collector.

[Production of secondary battery]

The secondary battery of the present invention can be produced in the same manner as in a case of producing a general secondary battery, except that the positive electrode obtained above is used. Moreover, the lithium-ion secondary battery of the present invention can be produced in the same manner as in a case of producing a general lithium-ion secondary battery, except that the negative electrode obtained above is used. A producing method in a case where the secondary battery is a lithium-ion secondary battery will be described below.

(Using active material as positive electrode active material)

The lithium-ion secondary battery can be produced using a negative electrode and an electrolyte, and further, if desired, a member such as a separator and the like, in addition to a positive electrode comprising the above-described active material (positive electrode active material), according to a conventional method.

<<Negative electrode>>

The negative electrode comprises the above-described current collector and a negative electrode material. As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, such as, for example, a carbon-based material, a silicon-based material, an alloy-based material, and the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present invention, neither the positive electrode nor the negative electrode contain lithium. For this reason, a lithium pre-doping process of inserting lithium into either or both of the negative electrode and the positive electrode in advance is required. As a method of pre-doping lithium, a known method may be followed. For example, when doping lithium into the negative electrode, there are a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolytic solution, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

<<Electrolyte>>

The electrolyte compensates for electric charge generated by electrons being released to an external circuit along with oxidation/reduction of active materials at the positive and negative electrodes, with flowing ions. As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as dimethoxyethane, ethylene carbonate, propylene carbonate, dimethyl carbonate, diethyl carbonate, ethyl methyl carbonate, dimethyl ether, $\gamma$-butyrolactone, acetonitrile, and the like. As the electrolyte, $Li(FSO_2)_2N$, $LiPF_6$, $LiBF_4$, $LiAsF_6$, $LiCF_3SO_3$, LiI, $LiClO_4$, and the like can be used. A concentration of the electrolyte has only to be about 0.5 mol/L to 5.0 mol/L. Besides, the electrolyte is not limited to one in a liquid state. For example, when the lithium-ion secondary battery is a lithium polymer secondary battery, the electrolyte is in a solid state (for example, a polymer gel state).

<<Separator>>

The lithium-ion secondary battery may comprise a member such as a separator and the like, in addition to the negative electrode, positive electrode, and electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolytic solution. As the separator, it is preferable to use a thin and microporous or non-woven fabric film made of polyethylene, polypropylene, polyacrylonitrile, aramid, polyimide, cellulose, glass, or the like. Moreover, these materials may be coated with alumina or the like. Examples of such a coated separator include, for example, alumina-coated polypropylene and the like.

<<Shape>>

A shape of the lithium-ion secondary battery is not particularly limited, and various shapes such as a cylindrical shape, a stacked shape, a coin shape, a laminate shape, a button shape, and the like can be used.

(Using active material as negative electrode active material)

The lithium-ion secondary battery can be produced using a positive electrode and an electrolyte, and further, if desired, a member such as a separator and the like, in addition to a negative electrode comprising the above-described active material (negative electrode active material), according to a conventional method.

<<Positive electrode>>

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCo_yNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

As for shapes of the electrolyte, the separator, and the lithium-ion secondary battery, the same ones as in the case of using the active material as the positive electrode active material can be used.

EXAMPLES

Although the present invention will be described based on Examples, it is not limited to Examples.

Materials used in Examples and Comparative examples are collectively shown below.

<Materials used in tests>

Acrylic resin 1: Spherical acrylic resin made of a homopolymer of methyl methacrylate (TECHPOLYMER MB-4 manufactured by Sekisui Kasei Co., Ltd., particle size: 4 $\mu$m)
Iron compound 1 (organic acid salt): Iron (II) oxalate dihydrate (iron (II) oxalate dihydrate manufactured by KANTO CHEMICAL CO., INC., guaranteed reagent)
Sulfur: Precipitated sulfur manufactured by Tsurumi Chemical Industry Co., Ltd.
Organic solvent (WET method): Acetone (acetone manufactured by YONEYAMA YAKUHIN KOGYO CO., LTD., special grade)

Production example 1 (Fine pulverization of iron compound)

Before subjecting an iron compound to a kneading step, the iron compound was pulverized for 5 minutes in advance using a freezing pulverizer (JFC-2000 manufactured by Japan Analytical Industry Co., Ltd.).

Production example 2 (Preparation of raw material by WET method)

An acrylic resin was added to an organic solvent and thoroughly mixed, and then an iron compound was further added to the mixture to obtain a liquid mixture. Next, the liquid mixture was removed of the organic solvent and pulverized using a cutter mill (LAB MILL manufactured by OSAKA CHEMICAL Co., Ltd.) to obtain a dry mixture.

The dry mixture thus obtained was mixed with sulfur using a blender to obtain a raw material for baking.

Examples and Comparative examples

<Production of active material>

(Baking raw material)

According to the compounding as described in Table 1, the raw material prepared by the WET method was used as a raw material for baking.

(Reaction device for baking)

A muffle furnace (FIG. 1) was used to bake the baking raw material. The muffle furnace in FIG. 1 is as described above.

(Baking step)

First, an atmosphere in a muffle furnace was replaced with an Ar gas three times using a vacuum pump with the baking raw material being contained in a tray that is an SUS container. Then, while continuously supplying the Ar gas at a flow rate of 100 mL/min from a gas introduction tube, heating of the muffle furnace was started 30 minutes after start of the supply. The temperature was increased at a temperature rising rate of 5°C/min, and when the temperature of the baking raw material reached a baking temperature described in Table 1, heat treatment was performed for 2 hours while maintaining the temperature. Next, while adjusting the flow rate of the Ar gas, the temperature of the baked material was naturally cooled to 25°C under an Ar gas atmosphere, and then the baked material was taken out from the muffle furnace.

(Pulverizing step)

Pulverization of the baked material was performed as follows. Production example 1: pulverizing with a cutter mill at 25,000 rpm for 10 seconds
Production example 2: pulverizing with a cutter mill at 25,000 rpm for 60 seconds
Production example 3: pulverizing with a cutter mill at 25,000 rpm for 30 seconds
Production example 4: lightly grinding in a mortar for 30 seconds.
Production example 5: pulverizing with a ball mill for 1 hour
Production example 6: freezing the baked material and then pulverizing with a steel ball for 10 minutes

(Classifying step)

In order to remove coarse particles from the baked material after the pulverization, the baked material was classified using a 32 μm mesh stainless steel sieve to obtain an active material.

<Physical property of active material>

(Elemental analysis)

Elemental analysis was performed on active materials produced in Examples and Comparative examples.
For carbon, hydrogen, nitrogen, and sulfur, a mass ratio (%) in a total amount of active materials was calculated from a mass measured using a vario MICRO cube, a fully automatic elemental analyzer, manufactured by Elementar. Moreover, a mass ratio (%) of oxygen to the total amount of active materials was calculated from a mass measured by an impulse heating/melting in an inert gas-NDIR method using a device, EMGA-920 manufactured by Horiba, Ltd. The results are shown in Table 1.

(Median diameter)

Using a laser diffraction/scattering type particle size distribution analyzer (particle size distribution analyzer PSA1090L manufactured by Anton Paar GmbH), a volume basis cumulative 50% size (median diameter $d_{50}$) was measured using water as a dispersion medium.

(Breaking strength Cs (MPa))

For an active material, a test force P, in mN, when particles of an active material broke was measured using an indenter of a micro-compression testing machine (MCT-510, manufactured by Shimadzu Corporation). That is, a test force P, in mN, was measured at which each particle of an active material broke by spreading a very small amount of active materials on a sample stand, and then compressing any five particles one by one with an indenter. Moreover, a particle size d, in μm, of each particle was calculated as an average of values measured in two perpendicular directions.
A breaking strength Cs, in MPa, was calculated by the following equation from the test force P, in mN, and the particle size d, in μm (where $\pi$ is a circular constant (3.14)).

$$Cs=2.48 \times P/\pi d^2$$

An average value of breaking strength Cs, in MPa, of five particles was calculated and regarded as a breaking strength Cs, in MPa, of the active material.
The results are shown in Table 1.

Table 1

| | | Production example | | | | | |
|---|---|---|---|---|---|---|---|
| | | 1 | 2 | 3 | 4 | 5 | 6 |
| Active mater rial | | | | | | | |
| Baking | Acrylic resin 1 | 100 | 100 | 100 | 100 | 100 | 100 |
| | Iron compound 1 | 100 | 100 | 100 | 100 | 100 | 100 |
| | Sulfur | 600 | 600 | 600 | 600 | 600 | 600 |
| | Baking temperature (°C) | 400 | 400 | 400 | 400 | 400 | 400 |
| Elemental analysis (% by mass) | C | 17.8 | 17.5 | 17.5 | 17.7 | 16.8 | 16.9 |
| | S | 62.8 | 63.2 | 62.1 | 62.7 | 62.6 | 62.9 |
| | N | 0.0 | 0.0 | 0.0 | 0.0 | 0.0 | 0.0 |
| | O | 3.1 | 3.3 | 3.3 | 3.2 | 3.1 | 3.2 |
| | H | 0.0 | 0.0 | 0.0 | 0.0 | 0.0 | 0.0 |
| | Total of C, S, N, O | 83.7 | 84.0 | 82.9 | 83.6 | 82.5 | 83.0 |
| Median diameter $d_{50}$ ($\mu$m) | | 9 | 2 | 5 | 13 | 0.71 | 1.5 |
| Breaking strength Cs (MPa) | | 3.3 | 3.3 | 3.2 | 3.4 | 3.1 | 3.2 |

<Production of positive electrode and lithium-ion secondary battery>

According to Tables 2 to 5, positive electrodes were produced with the active materials obtained above, and further, lithium-ion secondary batteries were produced with the positive electrodes, as described below.

(Conductive coating layer-coated current collecting foil)

A conductive coating layer-coated current collecting foil was produced as follows. 55 wt% of polyvinylidene fluoride (KF-#9700 manufactured by KUREHA CORPORATION) and 45 wt% of acetylene black (HS-100 manufactured by Denka Company Limited) were added, to which N-methylpyrrolidone (NMP) was added and thoroughly dispersed until a slurry viscosity reached about 1000 cP. The slurry was passed through a 400 mesh sieve, applied onto an Al (aluminum) foil having a thickness of 15 $\mu$m to a predetermined coating thickness, and dried to obtain a conductive coating layer-coated current collecting foil.

(Positive electrode)

A positive electrode was produced as follows. To 85 wt% of the active material obtained in Table 1, 10.0 wt% of polyacrylic acid (manufactured by FUJIFILM Wako Pure Chemical Corporation, average molecular weight: 2700 to 7500) and 5.0 wt% of acetylene black (manufactured by DENKA HS-100) were added, and the mixture was thoroughly kneaded with pure water for 1 hour, applied onto the conductive coating layer-coated current collecting foil obtained above, and dried, followed by pressed with a tabletop hot roll press (HSRP-60150H manufactured by Hohsen Corp.) so as to achieve a predetermined electrode porosity, in %, and vacuum-dried at 120°C for 6 hours, and the resultant was cut to a predetermined dimension to obtain a positive electrode.

(Negative electrode)

Li (lithium) having a thickness of 100 $\mu$m laminated to a Cu (copper) foil having a thickness of 6 $\mu$m was used, which was then punched out to a predetermined dimension in a dry atmosphere with a dew point of -50°C or lower to obtain a negative electrode.

(Electrolytic solution)

As an electrolytic solution, one obtained by dissolving lithium bis(fluorosulfonyl)imide (LiFSI manufactured by Tokyo Chemical Industry Co., Ltd.) in dimethoxyethane (DME) to 4 mol/L.

(Lithium-ion secondary battery)

The lithium-ion battery used for evaluation was produced as follows. A tab with a sealant was bonded to uncoated portions of a positive electrode cut in a predetermined dimension and a lithium negative electrode, respectively, using an ultrasonic metal bonding machine (manufactured by Nippon Avionics Co., Ltd.). These tabs placed to face each other were enclosed in an aluminum laminate material so that a composite material surface was sandwiched between alumina-coated polypropylene separators (manufactured by Shanghai Dinghao New Material Technology Co., Ltd., total thickness: 20 μm) cut to predetermined sizes, and aluminum laminate ends were heat-sealed, leaving an electrolytic solution injection port. An electrolytic solution (2.0 mL) was then injected from the injection port, and vacuum sealing was performed using a vacuum packaging machine manufactured by TOSEI CORPORATION to obtain a laminated lithium ion battery for evaluation.

<Evaluation on lithium-ion secondary battery>

(Discharge capacity and capacity retention rate)

Each laminated lithium-ion secondary battery produced in Examples and Comparative examples was charged and discharged at a current value corresponding to 50 mA per 1 g of a positive electrode active material, under a condition of a test temperature at 30°C. A discharge termination voltage was set to 1.0V, and a charge termination voltage was set to 3.0V. While charging and discharging were repeated, the first, the second, and the third battery discharge capacities (mAh) were observed. The measurement was performed using a battery performance evaluation device (BLS system manufactured by KEISOKUKI CENTER CO., LTD.).

(Average thickness (μm) of conductive coating layer)

An average thickness of a conductive coating layer was determined by measuring, after production of the conductive coating layer, each total thickness including a current collecting foil at any five points using Digimatic Indicator manufactured by Mitutoyo Corporation, subtracting a thickness of the current collecting foil from the measured value, and calculating an arithmetic mean of the subtracted values.

(Interface tortuosity τ)

The interface tortuosity τ between the conductive coating layer constituting the electrode and the composite material layer is expressed as b/a with a length of an interface on the composite material layer side (b μm) at a given distance (a μm) on a cross section of an electrode taken along a plane perpendicular to a flat surface on which the conductive coating layer and the composite material layer are layered (where, a>b). τ was defined as an average value of measured results taken once for each of any five cross sections of the above-described electrode, five times in total. Moreover, the values of a and b were defined as values obtained from microscopic images using an image analysis software ImageJ (https://imagej.nih.gov/ij/index.html).

(Electrode coating weight (mg/cm$^2$))

A coating weight D, in mg/cm$^2$, of the composite material layer of the electrode was calculated from the following equation after measuring a weight A, in mg, of an electrode punched out with a Thomson blade of a predetermined area C, in cm$^2$, and measuring a weight B, in mg, of a current collecting foil punched out with the same Thomson blade. The higher the coating weight is, the thicker the electrode is.

$$\text{Electrode coating weight D (mg/cm}^2\text{)} = (A\text{-}B)/C$$

(Electrode porosity (%))

(Electrode porosity (%))

A porosity of an electrode composite material layer is calculated by the following equation using the above-described electrode coating weight D, in mg/cm$^2$, and a thickness E, in μm, of the electrode, a thickness F, in μm, of the current collecting foil, and a true specific gravity G, in g/cm$^3$, of an electrode composite material.

$$\text{Electrode porosity (\%)} = 100 - [\{D/1000\}/\{(E-F)/10000\}]/G \times 100$$

(Electrode adhesion (mN/mm))

An electrode adhesion was measured by the 180° peel method using a device combining a force gauge and a measurement stand manufactured by IMADA CO., LTD. The measurement was performed at a speed of 100 mm/min using a test sample obtained by sticking a double-sided acrylic foam tape (H9004 manufactured by Nitto Denko Corporation) to conform with a surface of a punched electrode having an electrode width of 25 mm and an electrode length of 120 mm and pressing it with a roller. The maximum value, in mN, of the adhesion strength obtained was divided by the electrode width of 25 mm to obtain an electrode adhesion.

Table 2

| | | Example | | | | | | Comparative example | |
|---|---|---|---|---|---|---|---|---|---|
| | | 1 | 2 | 3 | 4 | 5 | 6 | 1 | 2 |
| Active material | | | | | | | | | |
| | Production example | 1 | 1 | 1 | 1 | 1 | 1 | 1 | 1 |
| | Amount of carbon element (% by mass) | 17.8 | 17.8 | 17.8 | 17.8 | 17.8 | 17.8 | 17.8 | 17.8 |
| | Amount of sulfur element (% by mass) | 62.8 | 62.8 | 62.8 | 62.8 | 62.8 | 62.8 | 62.8 | 62.8 |
| | Amount of nitrogen element (% by mass) | 0.0 | 0.0 | 0.0 | 0.0 | 0.0 | 0.0 | 0.0 | 0.0 |
| | Amount of oxygen element (% by mass) | 3.1 | 3.1 | 3.1 | 3.1 | 3.1 | 3.1 | 3.1 | 3.1 |
| | Average particle size $d_{50}$ ($\mu$m) | 9 | 9 | 9 | 9 | 9 | 9 | 9 | 9 |
| | Breaking strength Cs (MPa) | 3.3 | 3.3 | 3.3 | 3.3 | 3.3 | 3.3 | 3.3 | 3.3 |
| Electrode | | | | | | | | | |
| | Conductive coating layer Average thickness ($\mu$m) | 0.5 | 1 | 2 | 4 | 7 | 10 | 0 | 0.3 |
| | Interface tortuosity $\tau$ | 1.05 | 1.10 | 1.20 | 1.35 | 1.45 | 1.50 | 1.01 | 1.04 |
| | Electrode coating weight (mg/cm$^2$) | 6 | 6 | 6 | 6 | 6 | 6 | 6 | 6 |
| | Electrode porosity (%) | 35 | 35 | 35 | 35 | 35 | 35 | 35 | 35 |
| | Electrode adhesion (mN/mm) | 8 | 15 | 25 | 35 | 38 | 42 | 0.8 | 1.5 |
| Battery | | | | | | | | | |
| Charge and discharge capacity (mAh/g) | 1st ($DC_1$) | 850 | 880 | 895 | 904 | 903 | 905 | 352 | 620 |
| | 2nd ($DC_2$) | 765 | 792 | 806 | 815 | 813 | 815 | 317 | 558 |
| | 3rd ($DC_3$) | 706 | 733 | 745 | 756 | 752 | 754 | 255 | 516 |

Table 3

| | Example | | | | Comparative example | | |
|---|---|---|---|---|---|---|---|
| | 7 | 8 | 4 | 9 | 1 | 3 | 4 |
| Active material | | | | | | | |
| Production example | 2 | 3 | 1 | 4 | 1 | 5 | 6 |
| Amount of carbon element (% by mass) | 17.5 | 17.5 | 17.8 | 17.7 | 17.8 | 16.8 | 16.9 |
| Amount of sulfur element (% by mass) | 63.2 | 62.1 | 62.8 | 62.7 | 62.8 | 62.6 | 62.9 |

(continued)

|  |  | Example | | | | Comparative example | | |
|---|---|---|---|---|---|---|---|---|
|  |  | 7 | 8 | 4 | 9 | 1 | 3 | 4 |
| Active material |  |  |  |  |  |  |  |  |
| Amount of nitrogen element (% by mass) |  | 0.0 | 0.0 | 0.0 | 0.0 | 0.0 | 0.0 | 0.0 |
| Amount of oxygen element (% by mass) |  | 3.3 | 3.3 | 3.1 | 3.2 | 3.1 | 3.1 | 3.2 |
| Average particle size $d_{50}$ ($\mu$m) |  | 2 | 5 | 9 | 13 | 9 | 0.71 | 1.5 |
| Breaking strength Cs (MPa) |  | 3.3 | 3.2 | 3.3 | 3.4 | 3.3 | 3.1 | 3.2 |
| Electrode |  |  |  |  |  |  |  |  |
| Conductive coating layer Average thickness ($\mu$m) |  | 4 | 4 | 4 | 4 | 0 | 4 | 4 |
| Interface tortuosity $\tau$ |  | 1.57 | 1.44 | 1.35 | 1.27 | 1.01 | 1.85 | 1.62 |
| Electrode coating weight (mg/cm$^2$) |  | 6 | 6 | 6 | 6 | 6 | 6 | 6 |
| Electrode porosity (%) |  | 35 | 35 | 35 | 35 | 35 | 35 | 35 |
| Electrode adhesion (mN/mm) |  | 17 | 28 | 35 | 37 | 0.8 | 2.5 | 5 |
| Battery |  |  |  |  |  |  |  |  |
| Charge and discharge capacity (mAh/g) | 1st (DC$_1$) | 850 | 880 | 904 | 901 | 352 | 520 | 685 |
| | 2nd (DC$_2$) | 701 | 793 | 815 | 811 | 317 | 352 | 599 |
| | 3rd (DC$_3$) | 655 | 730 | 756 | 750 | 255 | 265 | 501 |

Table 4

|  | Example | | | | | Comparative example | | |
|---|---|---|---|---|---|---|---|---|
|  | 12 | 4 | 13 | 14 | 15 | 1 | 5 | 6 |
| Active material |  |  |  |  |  |  |  |  |
| Production example | 1 | 1 | 1 | 1 | 1 | 1 | 1 | 1 |
| Amount of carbon element (% by mass) | 17.8 | 17.8 | 17.8 | 17.8 | 17.8 | 17.8 | 17.8 | 17.8 |
| Amount of sulfur element (% by mass) | 62.8 | 62.8 | 62.8 | 62.8 | 62.8 | 62.8 | 62.8 | 62.8 |
| Amount of nitrogen element (% by mass) | 0.0 | 0.0 | 0.0 | 0.0 | 0.0 | 0.0 | 0.0 | 0.0 |
| Amount of oxygen element (% by mass) | 3.1 | 3.1 | 3.1 | 3.1 | 3.1 | 3.1 | 3.1 | 3.1 |
| Average particle size $d_{50}$ ($\mu$m) | 9 | 9 | 9 | 9 | 9 | 9 | 9 | 9 |
| Breaking strength Cs (MPa) | 3.3 | 3.3 | 3.3 | 3.3 | 3.3 | 3.3 | 3.3 | 3.3 |
| Electrode |  |  |  |  |  |  |  |  |
| Conductive coating layer Average thickness ($\mu$m) | 4 | 4 | 4 | 4 | 4 | 0 | 0 | 0 |
| Interface tortuosity $\tau$ | 1.29 | 1.35 | 1.38 | 1.42 | 1.43 | 1.01 | 1.01 | 1.02 |
| Electrode coating weight (mg/cm$^2$) | 3 | 6 | 9 | 12 | 15 | 6 | 3 | 12 |
| Electrode porosity (%) | 35 | 35 | 35 | 35 | 35 | 35 | 35 | 35 |
| Electrode adhesion (mN/mm) | 38 | 35 | 35 | 33 | 31 | 0.8 | 1.2 | 0.45 |

(continued)

| Battery | | | | | | | | | |
|---|---|---|---|---|---|---|---|---|---|
| Charge and discharge capacity (mAh/g) | 1st (DC$_1$) | 906 | 904 | 901 | 888 | 865 | 352 | 731 | 210 |
| | 2nd (DC$_2$) | 818 | 815 | 812 | 800 | 769 | 317 | 658 | 151 |
| | 3rd (DC$_3$) | 762 | 756 | 748 | 734 | 704 | 255 | 589 | 118 |

Table 5

| | | Example | | | | | Comparative example | | |
|---|---|---|---|---|---|---|---|---|---|
| | | 16 | 17 | 4 | 18 | 19 | 1 | 7 | 8 |
| **Active material** | | | | | | | | | |
| Production example | | 1 | 1 | 1 | 1 | 1 | 1 | 1 | 1 |
| Amount of carbon element (% by mass) | | 17.8 | 17.8 | 17.8 | 17.8 | 17.8 | 17.8 | 17.8 | 17.8 |
| Amount of sulfur element (% by mass) | | 62.8 | 62.8 | 62.8 | 62.8 | 62.8 | 62.8 | 62.8 | 62.8 |
| Amount of nitrogen element (% by mass) | | 0.0 | 0.0 | 0.0 | 0.0 | 0.0 | 0.0 | 0.0 | 0.0 |
| Amount of oxygen element (% by mass) | | 3.1 | 3.1 | 3.1 | 3.1 | 3.1 | 3.1 | 3.1 | 3.1 |
| Average particle size d$_{50}$ ($\mu$m) | | 9 | 9 | 9 | 9 | 9 | 9 | 9 | 9 |
| Breaking strength Cs (MPa) | | 3.3 | 3.3 | 3.3 | 3.3 | 3.3 | 3.3 | 3.3 | 3.3 |
| **Electrode** | | | | | | | | | |
| Conductive coating layer Average thickness ($\mu$m) | | 4 | 4 | 4 | 4 | 4 | 0 | 0 | 0 |
| Interface tortuosity $\tau$ | | 1.14 | 1.27 | 1.35 | 1.47 | 1.62 | 1.01 | 1.01 | 1.03 |
| Electrode coating weight (mg/cm$^2$) | | 6 | 6 | 6 | 6 | 6 | 6 | 6 | 6 |
| Electrode porosity (%) | | 52 | 44 | 35 | 28 | 22 | 35 | 44 | 28 |
| Electrode adhesion (mN/mm) | | 19 | 27 | 35 | 44 | 46 | 0.8 | 1.05 | 0.65 |
| **Battery** | | | | | | | | | |
| Charge and discharge capacity (mAh/g) | 1st (DC$_1$) | 901 | 905 | 904 | 895 | 879 | 352 | 489 | 102 |
| | 2nd (DC$_2$) | 812 | 814 | 815 | 806 | 792 | 317 | 421 | 82 |
| | 3rd (DC$_3$) | 746 | 754 | 756 | 744 | 728 | 255 | 368 | 68 |

As can be seen from Tables 2 to 5, the charge and discharge capacity is improved in Examples.

<Embodiments>

Preferred embodiments are shown below.
[1] An electrode comprising a current collector, a conductive coating layer formed on the current collector, and a composite material layer formed on the conductive coating layer,

wherein an average thickness of the conductive coating layer is 0.5 $\mu$m or more, preferably 1 $\mu$m or more, more preferably 2 $\mu$m or more, further preferably 4 $\mu$m or more, further preferably greater than 5 $\mu$m,
wherein an interface tortuosity $\tau$ between the conductive coating layer and the composite material layer is 1.05 or more, preferably 1.10 or more, more preferably 1.15 or more, further preferably 1.20 or more, further preferably 1.25 or more, further preferably 1.30 or more, further preferably 1.35 or more, further preferably 1.40 or more, further preferably 1.45 or more, further preferably 1.50 or more, and

wherein the composite material layer comprises an active material, and an average particle size $d_{50}$ of the active material is 2 $\mu$m or more, preferably greater than 3 $\mu$m, more preferably greater than 4 $\mu$m, further preferably 5 $\mu$m or more, further preferably greater than 6 $\mu$m, further preferably greater than 7 $\mu$m, further preferably greater than 8 $\mu$m.

[2] The electrode of [1] above, wherein for each of any five particles of the active material, when a particle size is referred to as d, in $\mu$m, and a test force at the moment when the particle breaks in a micro-compression test is referred to as P, in mN, an average value of breaking strength Cs, in MPa, calculated by the following equation is less than 70.0, preferably less than 60.0 MPa, more preferably less than 30.0 MPa, further preferably less than 15.0 MPa.

$$Cs=2.48 \times P/\pi d^2$$

(provided that d is an average value of diameters measured in two perpendicular directions for the particles, and $\pi$ is a circular constant (3.14).)

[3] The electrode of [2] above, wherein an average value of the breaking strength Cs, in MPa, is less than 10.0 MPa.

[4] The electrode of any one of [1] to [3] above, wherein the active material comprises at least two or more elements selected from the group consisting of carbon, sulfur, nitrogen, and oxygen, and wherein a content of the elements in the active material is greater than 50.0% by mass, preferably greater than 60.0% by mass, more preferably greater than 70.0% by mass, further preferably greater than 75.0% by mass, further preferably greater than 80.0% by mass.

[5] The electrode of any one of [1] to [3] above, wherein the active material comprises sulfur, and wherein a content of the sulfur in the active material is 45.0% by mass or more, preferably greater than 50.0% by mass, more preferably greater than 55.0% by mass, further preferably greater than 60.0% by mass.

[6] The electrode of any one of [1] to [5] above, wherein a carbon content based on a total mass of the composite material layer is 95% by mass or less, preferably less than 90% by mass, more preferably less than 80% by mass, further preferably less than 70% by mass.

[7] The electrode of any one of [1] to [5] above, wherein a sulfur content based on a total mass of the composite material layer is 5% by mass or more, preferably greater than 10% by mass, more preferably greater than 20% by mass, further preferably greater than 30% by mass.

[8] The electrode of any one of [1] to [7] above, wherein a volume resistivity of the conductive coating layer when coated on the surface of the current collector is $1.0 \times 10^6 \Omega$ cm or less, preferably $1.0 \times 10^5 \Omega$ cm or less, more preferably $1.0 \times 10^4 \Omega$ cm or less, further preferably $1.0 \times 10^3$ cm or less.

[9] The electrode of any one of [1] to [8] above, wherein an initial discharge capacity when the electrode is used as a positive electrode is 650 mAh/g or more, preferably greater than 650 mAh/g, more preferably greater than 700 mAh/g, further preferably greater than 710 mAh/g, further preferably greater than 720 mAh/g, further preferably greater than 730 mAh/g, further preferably greater than 740 mAh/g, further preferably 750 mAh/g or more, further preferably greater than 750 mAh/g.

[10] A secondary battery comprising the electrode of any one of [1] to [9] above.

[11] The secondary battery of [10] above, wherein the secondary battery is a lithium-ion secondary battery.

REFERENCE SIGNS LIST

1. Muffle furnace
2. Heater
3. Lid
4. Inert gas
5. Tray (upper tier)
6. Tray (lower tier)
7. Gas introduction tube
8. Gas discharge tube
9. Sodium hydroxide aqueous solution
10. Trap tank

**Claims**

1. An electrode comprising a current collector, a conductive coating layer formed on the current collector, and a composite material layer formed on the conductive coating layer,

   wherein an average thickness of the conductive coating layer is 0.5 $\mu$m or more,
   wherein an interface tortuosity $\tau$ between the conductive coating layer and the composite material layer is 1.05 or more, and
   wherein the composite material layer comprises an active material, the active material having an average particle size $d_{50}$ of 2 $\mu$m or more.

2. The electrode of claim 1, wherein, for each of any five particles of the active material, when a particle size is referred to as d, in $\mu$m, and a test force at the moment when the particle breaks in a micro-compression test is referred to as **P**, in mN, an average value of breaking strength Cs, in MPa, calculated by the following equation is less than 70.0 MPa.

$$Cs=2.48 \times P/\pi d^2$$

   (provided that d is an average value of diameters measured in two perpendicular directions for the particles, and $\pi$ is a circular constant (3.14).)

3. The electrode of claim 2, wherein an average value of the breaking strength Cs, in MPa, is less than 10.0 MPa.

4. The electrode of claim 1, wherein the active material comprises at least two or more elements selected from the group consisting of carbon, sulfur, nitrogen, and oxygen, and wherein a content of the elements in the active material is greater than 50.0% by mass.

5. The electrode of claim 1, wherein the active material comprises sulfur, and wherein a content of the sulfur in the active material is 45.0% by mass or more.

6. The electrode of claim 1, wherein a carbon content based on a total mass of the composite material layer is 95% by mass or less.

7. The electrode of claim 1, wherein a sulfur content based on the total mass of the composite material layer is 5% by mass or more.

8. The electrode of claim 1, wherein a volume resistivity of the conductive coating layer when coated on the surface of the current collector is $1.0 \times 10^6 \Omega$ cm or less.

9. The electrode of claim 1, wherein an initial discharge capacity of the electrode when used as a positive electrode is 650 mAh/g or more.

10. A secondary battery comprising the electrode of any one of claims 1 to 9.

11. The secondary battery of claim 10, wherein the secondary battery is a lithium-ion secondary battery.

# FIG. 1

## INTERNATIONAL SEARCH REPORT

| International application No. |
| --- |
| **PCT/JP2023/039091** |

### A. CLASSIFICATION OF SUBJECT MATTER

*H01M 4/13*(2010.01)i; *H01M 4/133*(2010.01)i; *H01M 4/136*(2010.01)i; *H01M 4/38*(2006.01)i; *H01M 4/58*(2010.01)i; *H01M 4/587*(2010.01)i; *H01M 4/66*(2006.01)i; *H01M 10/052*(2010.01)i
FI: H01M4/13; H01M4/133; H01M4/136; H01M4/38 Z; H01M4/58; H01M4/587; H01M4/66 A; H01M10/052

According to International Patent Classification (IPC) or to both national classification and IPC

### B. FIELDS SEARCHED

Minimum documentation searched (classification system followed by classification symbols)

H01M4/13; H01M4/38; H01M4/58; H01M4/66; H01M4/133; H01M4/136; H01M4/587; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/088087 A1 (ADEKA CORPORATION) 09 May 2019 (2019-05-09)<br>example 14 | 1-11 |
| P, X | JP 7318789 B1 (SUMITOMO RUBBER INDUSTRIES, LTD.) 01 August 2023 (2023-08-01)<br>example 1 | 1-11 |
| A | JP 2022-81306 A (KABUSHIKI KAISHA TOYOTA JIDOSHOKKI) 31 May 2022<br>(2022-05-31)<br>paragraphs [0069], [0094] | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 January 2024** | **16 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/039091**

| Patent document cited in search report | Publication date (day/month/year) | Patent family member(s) | Publication date (day/month/year) |
|---|---|---|---|
| WO 2019/088087 A1 | 09 May 2019 | US 2020/0243860 A1<br>example 14<br>EP 3706215 A1<br>CN 111226333 A<br>KR 10-2020-0081362 A | |
| JP 7318789 B1 | 01 August 2023 | (Family: none) | |
| JP 2022-81306 A | 31 May 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044437 A